# EUROPEAN PATENT APPLICATION

(11) **EP 4 624 721 A1**
(43) Date of publication of application: **01.10.2025**
(21) Application number: 24166955.5
(22) Date of filing: 27.03.2024
(51) Int. Cl.: E06C 7/14, F16B 13/08

(54) **MECHANICAL CONNECTION DEVICE FOR LADDER STEPS, AND LADDER INCLUDING THE DEVICE**

(71) Applicant: El Onceavo Mes, S.L., 28010 Madrid (ES)
(72) Inventor: Aguerri Bariain, Hector, 31300 Tafalla (ES)
(74) Representative: Isern Patentes y Marcas S.L.

(57) **Abstract**

The present invention relates to a device that comprises: an outer piece (5); an inner piece (6), and a screwed attachment (18, 19, 20). The outer piece (5) comprises a plate (7), with tabs (8) that protrude, and that define a housing (12) for the inner piece (6). The inner piece (6) comprises a base body (13), from which a shaft (14) with a decreasing cross section protrudes, to be housed in the housing (12) forcing the tabs (8) to deploy outwards. The screwed attachment (18, 19, 20) comprises a threaded bolt (18) and a nut (19). The bolt (18) passes through the outer (5) and inner (6) pieces, such that, when the bolt (18) is rotated, it is threaded into the nut (19) and the shaft (14) is inserted into the housing (12) that displays the tabs (8).

## Description

### Technical field of the invention

The present invention can be included in the sector of ladders, both fixed and step ladders. More specifically, the subject matter of the invention relates to a mechanical connection device for fastening accessory elements to a ladder step.

### Background of the invention

Both fixed and step ladders must be used in collaboration with safety accessories, such as anti-fall safety rings, reinforcing straps and fastening supports, which must be fastened to the ladder itself, which creates the need to find solutions to fasten accessories to the ladder.

### Description of the invention

The present invention discloses, according to a first aspect, a mechanical connection device for fastening safety accessories on steps of both a fixed and step ladder, in particular, for aluminium steps, of independent claim 1. According to a second aspect of the invention, a ladder is disclosed that includes the aforementioned fastening device, according to claim 9. Other optional advantageous embodiments of the invention are described in the dependent claims and in the description of the preferred exemplary embodiment.

The disclosed connection device benefits from an economical construction, as well as allowing safety accessories to be fastened to the steps of the ladder quickly and robustly.

### Brief description of the figures

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows an exploded perspective view of the mechanical connection device of the invention, in an exemplary embodiment in which the nut is outside the inner piece.
Figure 2 shows an exploded perspective view of the assembly of the device of Figure 1 on a step of a step ladder, with the nut hidden, as it is included and fastened inside the inner piece.

### Detailed description of a preferred embodiment of the invention

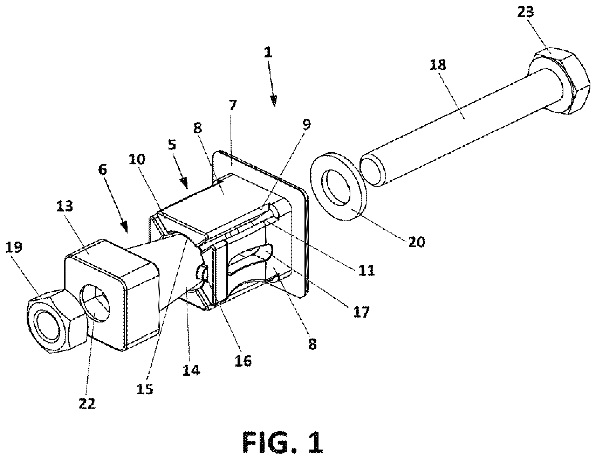

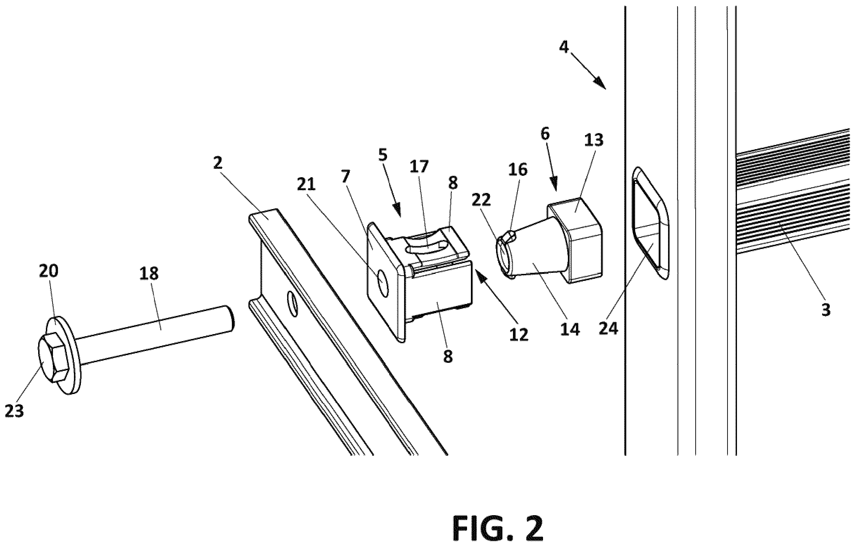

Next, with the help of the previous figures 1-2, a detailed description of a preferred exemplary embodiment of a mechanical connection device (1) is provided, according to the present invention, by means of which accessories (2), such as safety accessories, are connected to steps (3) of a ladder (4), in particular, aluminium steps (3), such as, for example, of a step ladder.

The connection device (1) of the invention comprises an outer piece (5) and an inner piece (6), intended to be partially housed inside the outer piece (5).

The outer piece (5) comprises a flat base, which includes a plate (7) which, in the example represented in the figures, has a quadrangular shape. Several tabs (8) protrude frontally from the plate (7) in a cantilever manner - four tabs (8) are represented in the figures - forming, in sections, a prism, a cylinder, a truncated pyramid or a truncated cylinder. The tabs (8) comprise side edges by which the tabs (8) are adjacent to each other, wherein the edges comprise chamfers (9) that extend to free ends (10) of the tabs, leaving gaps (11) between adjacent tabs (8). Preferably, the chamfers (9) start at a distance from the plate (7), such that, at one end of each tab (8), closest to the plate (7), there is no chamfer (9). A housing (12) is defined between the tabs (8) to house the inner piece (6), as explained below.

Preferably, the outer piece (5) is formed monolithically, wherein the base and the tabs (8) form an integral part of one same body. Likewise, preferably, the outer piece (5) can be made of plastic, such as by moulding or injection.

As for the inner piece (6), it comprises a base body (13), with a flat inner face, from which a shaft (14) protrudes frontally which, as it moves away from the inner face, has a decreasing cross section, such as a truncated cone or truncated pyramid.

The inner piece (6) is intended to be housed in the outer piece (5). More specifically, the shaft (14) of the inner piece (6) is intended to be housed in the housing (12) of the outer piece (5). To do this, the tabs (8) of the outer piece (5) can be configured in correspondence with the outer shape of the shaft (14). The figures show an example in which the shaft (14) has a conical shape, such that the tabs (8) include respective cylindrical or conical recesses (15).

The dimensions of the shaft (14) and the housing (12) are such that the shaft (14) can only be inserted into the housing (12) in a forced manner, forcing a separation of the tabs (8), which deploy outwards, changing from an initial retracted position in which the free end (10) of the tabs does not protrude externally with respect to the end attached to the plate (7), to a final deployed position in which the free end (10) of the tabs (8) protrudes externally with respect to the end by which the tabs (8) are attached to the plate (7).

To provide greater robustness to the connection just described, the connection device (1) further includes a combination of projections (16) and slots (17), which are described below. In this sense, the shaft (14) incorporates, protruding outwards from its side surface, at least one projection (16), located in the vicinity of the free end of the shaft (14), preferably, at the free end itself. Preferably, more than one projection (16) is provided, for example, two projections (16) which, more preferably, are located in opposite locations. Correspondingly, at least one of the tabs (8), more specifically, at least as many tabs (8) as projections (16) comprised by the shaft (14), include corresponding longitudinal slots (17), for example, in a central area of the tabs (8), as seen in the figures, to house the projections (16) and retain the shaft (14) inside the housing (12). Preferably, the projection (16) has an increasing cross section, as it accesses the slot (17), to facilitate access and to cause a retention by shape closure, once the projection (16) has completely accessed the slot (17).

Similarly to the outer piece (5), the inner piece (6) is also preferably manufactured monolithically, such as in plastic material, for example, by injection or moulding.

Finally, to provide even greater robustness to the connection, the connection device (1) may include a screwed attachment (18, 19, 20) comprising a threaded bolt (18) and a nut (19), as well as, optionally, one or more washers (20). Additionally, the plate (7) of the base of the outer piece (5) has a first hole (21), which is a through hole, and collinear with the housing (12), while the inner piece (6) has a second longitudinal hole (22), which is also a through hole, such that, when the shaft (14) is housed in the housing (12), the first hole (21) and the second hole (22) are collinear. According to the foregoing, the bolt (18) is configured to pass through the first hole (21) and the second hole (22), from the outer piece (5) towards the inner piece (6), and protruding from a rear face of the base body (13) of the inner piece (6). The nut (19) can be threaded on the end of the bolt (18). Optionally, a washer (20) is interspersed between a head (23) of the bolt (18) and a rear face of the plate (7). Likewise, preferably, the nut (19) can be housed and fastened in the base body (13). For example, if the base body (13) is a plastic piece manufactured by moulding, the nut (19) is housed inside a mould prior to moulding, being retained inside the inner piece (6) after demoulding.

To attach the accessory (2) to the step (3) of the ladder (4), using the connection device (1) of the present invention, the step (3) has a mortise (24), accessible from the outside, in which the inner piece (6) is housed. With the shaft (14) of the inner piece (6) inserted, as explained before, in the housing (12), the tabs (8) move outwards, as well as the projections (16) being housed in the slots (17). The bolt (18) is inserted into the first hole (21) and the second hole (22), and is threaded into the nut (19), leaving the accessory (2) between the bolt (18) and the plate (7) of the outer piece (5), and thus the connection is completed. By acting on the head (23) of the bolt (18), the shaft (14) is inserted inside the housing (12), whereupon the tabs (8) are deployed and contact the inner walls of the mortise (24), providing a friction force that can withstand 300 kg.

By way of example, the outer piece (5) and the inner piece (6) can be made of a commercial impact-modified polyamide material with fibreglass, in particular, a material identified as PA6 GF15 MI UV. As for the bolt (18), the nut (19) and the washer (20), they can be made of A4 quality steel.

### List of references:

- 1: Mechanical connection
- 2: Accessories
- 3: Steps
- 4: Ladder
- 5: Outer piece
- 6: Inner piece
- 7: Plate
- 8: Tabs
- 9: Chamfers
- 10: Free ends of the tabs
- 11: Gaps
- 12: Housing
- 13: Base body
- 14: Shaft
- 15: Recesses of the tabs
- 16: Projections
- 17: Slots
- 18: Threaded bolt
- 19: Nut
- 20: Washer
- 21: First hole
- 22: Second hole
- 23: Head of the bolt
- 24: Mortise

## Claims

1. A mechanical connection device (1) to connect accessories (2) to steps (3) of a ladder (4), **characterised in that** it comprises: an outer piece (5); an inner piece (6), intended to be partially housed inside the outer piece (5); and a screwed attachment (18, 19, 20), to house the inner piece (6) in the outer piece (5);
wherein the outer piece (5) comprises a plate (7), from which several tabs (8) protrude, between which a housing (12) is defined to house the inner piece (6);
wherein the inner piece (6) comprises a base body (13), from which a shaft (14), with a decreasing cross section protrudes, intended to be housed in the housing (12) in a forced manner, forcing the tabs (8) to deploy outwards;
wherein the screwed attachment (18, 19, 20) comprises a threaded bolt (18) and a nut (19); wherein the plate (7) has a first hole (21), which is a through hole, and collinear with the housing (12), and the inner piece (6) has a second longitudinal hole (22), which is a through hole, such that, when the shaft (14) is housed in the housing (12), the first hole (21) and the second hole (22) are collinear; and
wherein the bolt (18) is configured to pass through the first hole (21) and the second hole (22), protruding from a rear face of the base body (13) of the inner piece (6), such that, when a turn of the bolt (18) is actuated, the bolt (18) is threaded into the nut (19) and the shaft (14) is inserted into the housing (12) which deploys the tabs (8).

2. The mechanical connection device (1) according to claim 1,
wherein the shaft (14) incorporates, protruding outwards, at least one projection (16), located in the vicinity of the free end of the shaft (14); and
wherein, at least as many tabs (8) as projections (16) comprised by the shaft (14), include corresponding longitudinal slots (17), to house the projections (16) and retain the shaft (14) inside the housing (12) by shape closure.

3. The mechanical connection device (1) according to claim 2, which has more than one projection (16), for example, two projections (16) that, more preferably, are located in opposite locations.

4. The mechanical connection device (1), according to any of claims 2-3, wherein the projection (16) has an increasing cross section to facilitate access and, once the projection (16) has completely accessed the slot (17), to produce a retention by shape closure.

5. The mechanical connection device (1), according to any of claims 1-4, wherein the outer piece (5) and/or the inner piece (6) are formed monolithically, as single integral bodies.

6. The mechanical connection device (1), according to any of claims 1-5, wherein the outer piece (5) and/or the inner piece (6) are made of plastic material by moulding or injection.

7. The mechanical connection device (1), according to any of claims 1-6, wherein the nut (19) is housed and fastened inside the base body (13).

8. The mechanical connection device (1), according to claims 5, 6 and 7 simultaneously, wherein the inner piece (6) is formed monolithically by moulding plastic material, and wherein the nut (19) is retained in the inner piece (6) as a result of moulding.

9. A ladder (4), comprising steps (3), **characterised in that** at least one of the steps (3) includes a mortise (24), accessible from the outside, in which the mechanical connection device (1) of any of claims 1-8 is housed,
wherein the tabs (8) are configured to, when expanded, contact the inner walls of the mortise (24), providing a friction force that serves to hold accessories (2) by means of the steps (3).
